# FASCICULE DE BREVET EUROPEEN

(11) **EP 4 076 885 B1**
(45) Date de publication et mention de la délivrance du brevet: **22.11.2023**
(21) Numéro de dépôt: 20848704.1
(22) Date de dépôt: 17.12.2020
(51) Int. Cl.: B29C 33/00, B29C 70/46, F02K 1/72, F04D 29/54, B29L 31/60, B29C 33/48, B29C 33/52, B29L 31/00

(54) **OUTILLAGE POUR LA FABRICATION D'ÉLÉMENTS AJOURÉS TELS QUE DES GRILLES POUR NACELLE D'AÉRONEF ET PROCÉDÉ UTILISANT UN TEL OUTILLAGE**
WERKZEUG ZUM HERSTELLEN VON OFFENEN ELEMENTEN WIE KASKADEN FÜR FLUGZEUGGONDELN UND VERFAHREN UNTER VERWENDUNG EINES SOLCHEN WERKZEUGS
TOOL FOR MANUFACTURING OPENWORK ELEMENTS SUCH AS CASCADES FOR AIRCRAFT NACELLES AND METHOD USING SUCH A TOOL

(30) Priorité: 19.12.2019 FR 1914856
(43) Date de publication de la demande: 26.10.2022
(73) Titulaire: Safran Nacelles, 76700 Gonfreville l'Orcher (FR)
(72) Inventeur: DESJOYEAUX, Bertrand, 77550 MOISSY CRAMAYEL (FR); SOREL, Mickaël, 77550 MOISSY CRAMAYEL (FR); MAZE, Franck, 77550 MOISSY CRAMAYEL (FR); OLIVEUX, Géraldine, 77550 MOISSY CRAMAYEL (FR)
(74) Mandataire: Germain Maureau
(86) Numéro de dépôt international: PCT/FR2020/052486
(87) Numéro de publication internationale: WO 2021/123628

(56) Documents cités:
- EP-A2- 2 944 452
- US-A- 5 356 692
- US-A- 5 576 079
- US-A1- 2018 222 131

## Description

### Domaine Technique

La présente invention a pour objet un outillage pour la fabrication d'éléments ajourés tels que des grilles d'inverseur de poussée pour nacelle d'aéronef et un procédé de fabrication d'éléments ajourés utilisant un tel outillage.

### Technique antérieure

Un aéronef est propulsé par au moins un ensemble propulsif comportant un turboréacteur logé dans une nacelle. Chaque ensemble propulsif est rattaché à l'aéronef par un mât situé généralement sous ou sur une aile ou au niveau du fuselage de l'aéronef.

Une nacelle présente généralement une structure tubulaire comprenant une entrée d'air en amont du turboréacteur, une section médiane destinée à entourer une soufflante du turboréacteur, une section aval pouvant abriter des moyens d'inversion de poussée, nommés inverseurs de poussée, et destinée à entourer la chambre de combustion du turboréacteur, et est généralement terminée par une tuyère d'éjection dont la sortie est située en aval du turboréacteur.

Les inverseurs de poussée comprennent des éléments mobiles d'inversion de poussée, généralement deux éléments mobiles d'inversion de poussée, portés par la nacelle pour se déplacer entre une position de fermeture (jet direct) dans laquelle l'inverseur de poussée est inactif, et une position d'ouverture (jet inversé) dans laquelle l'inverseur de poussée est actif, c'est-à-dire qu'il renvoie au moins une partie du flux de gaz généré par le turboréacteur dans la direction inverse au flux guidé par la nacelle.

Dans de nombreux types d'inverseur de poussée, les éléments mobiles d'inversion de poussée comprennent des éléments d'orientation d'air qui renvoie au moins une partie du flux de gaz vers l'extérieur et vers l'avant, ces éléments d'orientation d'air sont des grilles telles que des grilles à ailettes (également nommées cascades).

Les grilles sont avantageusement en matériaux composites, afin de les rendre plus légères que des grilles métalliques. De telles grilles sont généralement fabriquées par un procédé de drapage manuel de nombreux morceaux de tissus composite, ce qui est très coûteux et ne permet pas d'obtenir des profils aérodynamiques réellement évolutifs.

Dans une variante décrite dans le brevet FR 2 869 258 B1, les grilles en matériau composite sont fabriquées par un procédé de moulage par thermocompression grâce à un outillage comprenant un poinçon et une matrice. Un tel procédé a pour conséquence de limiter la géométrie des grilles. En effet, les grilles obtenues par ce type de procédés dépendent de la géométrie de l'outillage et nécessitent des dépouilles pour permettre le démoulage.

Il existe également des outillages à couches multiples glissant et offrant un peu plus de possibilités de démoulage sans nécessiter de dépouille.

Dans une autre variante, les grilles en matériau composite sont fabriquées par un procédé de moulage par thermocompression grâce à un outillage comportant une base avec des noyaux souples (silicone) aptes à gonfler à la chaleur, et un couvercle. Dans ce type de procédé, de la matière composite est disposée dans l'outillage qui est alors refermé, puis on chauffe afin de faire gonfler les noyaux. La matière est alors solidifiée entre les noyaux, ce qui permet de fabriquer les grilles. L'inconvénient de ce type de procédé est le manque de contrôle de l'expansion des noyaux et donc de la géométrie des grilles ainsi générées.

Un autre procédé de fabrication de grilles en matériau composite par thermocompression, consiste à utiliser un outillage comportant une base avec des noyaux rigides expansibles, et un couvercle. A la différence du procédé précédent, les noyaux rigides expansibles sont des noyaux formés d'éléments sensiblement en L formant les parois et angles des noyaux. Ces éléments sont mobiles afin de permettre l'expansion mécanique des noyaux. Un tel procédé est complexe et coûteux du fait de la complexité mécanique de l'outillage. De plus, le démoulage est complexe.

Il est également connu de fabriquer des grilles en matériau composite grâce à des outillages et procédés tels que décrits dans les documents EP 2 944 452, US 5 576 079, US 5 356 692 et US 2018/222131.

L'objectif de la présente invention est de proposer un outillage et un procédé de fabrication d'éléments ajourés en matériau composite, tels que des grilles d'inverseur de poussée pour nacelle d'aéronef, qui soit moins couteux que les outillages et procédés décrits précédemment, et qui permette de réaliser des éléments ajourés présentant des géométries adaptées aux performances aérodynamiques de la nacelle, de manière rapide.

### Exposé de l'invention

A cet effet, l'invention a pour objet un outillage pour la fabrication d'un élément ajouré en matériau composite, tel qu'une grille de déviation d'air ou une grille d'inverseur de poussée pour nacelle d'aéronef, l'outillage comportant :
- une première et une seconde semelle, chaque semelle étant configurée pour être disposée de part et d'autre de l'élément ajouré à fabriquer,
- des éléments d'outillage disposés entre les première et seconde semelles, les éléments d'outillage comprenant :
   ∘ Au moins un noyau configuré pour délimiter une alvéole de l'élément ajouré à fabriquer, l'au moins un noyau étant mobile en translation le long des première et seconde semelles,
   ∘ Des barreaux périphériques disposés en périphérie des noyaux et configurés pour délimiter l'élément ajouré à fabriquer, au moins un barreau périphérique étant mobile en translation le long des première et seconde semelles.

Ainsi lorsque de la matière destinée à former au moins en partie l'élément ajouré, est disposée dans l'outillage, entre les éléments d'outillage, les éléments d'outillage sont libres de glisser entre les première et seconde semelles afin de comprimer la matière, lors de l'application d'une force sur les barreaux périphériques, en direction des noyaux.

Par « matière destinée à former au moins en partie l'élément ajouré » on entend soit un matériau composite préimprégné de résine, soit un renfort fibreux auquel sera ajouté dans un second temps une résine afin de former le matériau composite constitutif de l'élément ajouré.

L'outillage est simple et peu coûteux. La disposition de matière est facilitée notamment par la mobilité des éléments d'outillages et l'accessibilité aux espaces inter éléments. Il permet de réaliser des éléments ajourés présentant des géométries adaptées aux performances aérodynamiques de la nacelle, du fait de la liberté de mobilité des éléments d'outillage et de la liberté de forme des première et seconde semelles et des éléments d'outillage.

L'outillage est un moule pour fabriquer un élément ajouré. L'élément ajouré est délimité au maximum par les première et deuxième semelles, et les barreaux périphériques.

Les première et deuxième semelles, et les barreaux périphériques, correspondent à des parois du moule.

L'élément ajouré obtenu grâce à l'outillage selon l'invention présente des profils longitudinaux et transversaux délimitant des alvéoles, lesdits profils s'étendant transversalement entre les première et seconde semelles. Les profils périphériques s'étendant le long des barreaux périphériques.

En outre, un tel outillage permet d'appliquer de fortes pression sur la matière destinée à former au moins en partie l'élément ajouré pour assurer son étalement dans l'empreinte de moule fermé (jusque 200 voire 300 bars).

Les barreaux périphériques sont des éléments formant une clôture périphérique configurée pour délimiter l'élément ajouré à fabriquer.

En d'autres termes, les première et seconde semelles sont configurées pour prendre en sandwich l'élément ajouré à fabriquer.

En plus des caractéristiques de l'invention selon les revendications indépendantes, l'outillage comporte l'une ou plusieurs des caractéristiques optionnelles suivantes.

Selon une caractéristique, les première et seconde semelles sont parallèles.

Selon une caractéristique les première et seconde semelles sont courbes avec un secteur angulaire de l'ordre de 30 à 60°, de façon à permettre de générer des éléments ajourés dont la géométrie est adaptée aux performances aérodynamiques de la nacelle.

Selon une caractéristique, les première et seconde semelles sont planes.

Les éléments d'outillage présentent des surfaces d'interface respectives avec les première et seconde semelles qui sont complémentaires des première et seconde semelles.

Selon une caractéristique, chaque barreau périphérique est mobile en translation le long des première et seconde semelles.

Selon une caractéristique, l'outillage comporte au moins un barreau périphérique non mobile en translation le long des première et seconde semelles.

A cet effet, le barreau périphérique est fixé à au moins une des première et seconde semelles.

Selon une caractéristique, l'outillage comporte au moins deux barreaux périphériques adjacents reliés entre eux pour former un barreau d'angle en forme de L.

Selon une caractéristique, le barreau d'angle est non mobile en translation le long des première et seconde semelles.

A cet effet, le barreau d'angle est fixé à au moins une des première et seconde semelles.

Selon une caractéristique, le barreau d'angle est mobile en translation le long des première et seconde semelles.

Selon une caractéristique, l'outillage comporte des dispositifs de déplacement tels que des vérins, configurés pour appliquer une force contre chaque barreau périphérique mobile en translation.

De manière générale, par « dispositif de déplacement » on entend tout dispositif commandé permettant d'exercer une force sur l'élément d'outillage, la force étant suffisante pour obtenir le déplacement dudit élément d'outillage. Il peut s'agir d'un vérin hydraulique, un vérin électrique, un système mécanique avec moteur et vis sans fin ou bras de levier, etc.

Selon une caractéristique, l'outillage comporte en outre des éléments d'outillage supplémentaires destinés à être disposés entre les première et seconde semelles, entre au moins un noyau et un barreau périphérique, les éléments d'outillage supplémentaires étant configurés pour permettre le moulage d'éléments pleins tels que des brides.

Selon cette caractéristique, les éléments d'outillage supplémentaires comportent au moins un bloc mobile en translation perpendiculairement aux première et seconde semelles et configuré pour délimiter un élément plein tel qu'une bride.

Selon une caractéristique, l'outillage comporte en outre un dispositif de compaction configuré pour assurer la translation du bloc, afin de permettre la compaction de matière disposée dans l'outillage pour former au moins en partie l'élément plein.

Selon une caractéristique, le dispositif de compaction comporte au moins une protubérance disposée sur la seconde semelle, configurée pour coopérer avec une encoche disposée sur un élément d'outillage supplémentaire à l'interface avec la seconde semelle, de sorte à permettre de déplacer l'élément d'outillage supplémentaire pour compacter la matière destinée à former au moins en partie l'élément plein.

Selon une autre caractéristique, le dispositif de compaction est un élément tel qu'une barre longitudinale, destiné à être disposé à l'aplomb du bloc et configuré pour être déplacé perpendiculairement aux première et seconde semelles par un dispositif de déplacement tel qu'un vérin, de sorte à entraîner le bloc en translation perpendiculairement aux première et seconde semelles.

Selon une caractéristique, l'outillage comporte des moyens pour délimiter un espace minimal entre les noyaux.

Selon cette caractéristique, les moyens pour délimiter un espace minimal entre les noyaux sont des excroissances disposées sur les noyaux au niveau de leur(s) face(s) disposée(s) en vis-à-vis des première et/ou seconde semelles, les excroissances de noyaux adjacents présentant des formes complémentaires de sorte à permettre leur emboitement lors du rapprochement des noyaux, tout en laissant un espace minimal formant chambre de compression, entre les noyaux.

Ainsi, lorsque de la matière destinée à former au moins en partie l'élément ajouré est disposée dans l'outillage, entre les éléments d'outillage, les excroissances limitent les déplacements de la matière hors des espaces formant chambre de compression.

Selon une caractéristique, les noyaux avec excroissances présentent une forme en C ou en Z ou en L.

Selon une caractéristique, chaque noyau comporte au moins une patte d'indexation configurée pour coopérer avec une cavité disposée dans un noyau adjacent de sorte à permettre l'emboitement des noyaux lors de leur rapprochement. Ainsi, les pattes d'indexation assurent un meilleur positionnement des noyaux lors de leur déplacement.

Selon une caractéristique, les pattes d'indexation présentent une forme en V ou en U.

Selon une caractéristique, l'outillage comporte des moyens de guidage configurés pour guider les éléments d'outillage dans leur déplacement. Ainsi, les éléments d'outillage ont un meilleur positionnement relatif. Les moyens de guidage permettent de limiter les oscillations autour d'axes perpendiculaires aux première et seconde semelles.

Les moyens de guidage sont par exemple des nervures coopérant avec des rainures.

Selon une caractéristique, les moyens de guidage comprennent des traverses disposées entre les noyaux et les première et/ou seconde semelles, chaque traverse correspondant à une rangée de noyaux et comportant des nervures coopérant avec des rainures disposées sur les noyaux à l'interface avec les traverses, les nervures et rainures étant parallèles à une direction de déplacement des noyaux.

Selon une caractéristique, les moyens de guidage comprennent en outre :
- des rainures supplémentaires disposées sur les traverses à l'opposé des nervures, les rainures supplémentaires étant parallèles à une autre direction de déplacement des noyaux, et
- des traverses supplémentaires disposées perpendiculairement aux traverses, entre les traverses et les première et/ou seconde semelles, les traverses supplémentaires comprenant des nervures supplémentaires parallèles aux rainures supplémentaires.

Ainsi, les rainures des noyaux guident le déplacement des noyaux dans une première direction, et les rainures supplémentaires des traverses guident le déplacement des noyaux dans une seconde direction.

Selon une caractéristique l'outillage est en matériau métallique ou en matériau plastique à point de fusion adapté pour permettre de chauffer la matière destinée à former au moins en partie l'élément ajouré, disposée à l'intérieur, sans se dégrader.

Par « point de fusion adapté pour permettre de chauffer la matière destinée à former au moins en partie l'élément ajouré, disposée à l'intérieur, sans se dégrader », on entend un point de fusion compris entre au moins quelques degrés au-dessus de la température nécessaire à la solidification de la matière constitutive de l'élément ajouré, et au plus une température de fusion compatible de non dégradation significative de la matière de l'élément ajouré consolidé pendant la durée de fusion de l'élément d'outillage.

Selon une caractéristique, les noyaux sont rigides et configuré pour être démontés de l'outillage.

En variante, les noyaux sont en matériau fusible à des températures de l'ordre de au moins quelques degré au-dessus de la température nécessaire à la solidification de la matière constitutive de l'élément ajouré, et au plus une température de fusion compatible de non dégradation significative de la matière de l'élément ajouré consolidé , ou soluble dans un solvant compatible de non dégradation de la matière de l'élément ajouré consolidé, tel que de l'eau, pour être éliminés par fusion ou dissolution. Ainsi, il est possible d'obtenir des formes d'éléments ajourés complexes, incluant des formes en contre dépouilles. Les noyaux peuvent être en matériau soluble à l'eau, tel que le béton de sable lié par alcool polyvinyle.

Dans la variante selon laquelle les noyaux sont en matériau soluble dans un solvant, le solvant ne doit pas altérer le matériau composite constitutif de l'élément ajouré.

Dans une variante préférée les noyaux sont en alliage métallique à point de fusion maitrisé (alliages dits eutectiques).

Selon une caractéristique, l'outillage est étanche.

L'invention concerne en outre un procédé de fabrication d'éléments ajourés en matériau composite, tels que des grilles d'inverseur de poussée pour nacelle d'aéronef, par moulage par compression dans un outillage tel que décrit précédemment, le procédé comportant les étapes suivantes :
a. Une étape de disposition des éléments d'outillages et de matière destinée à former au moins en partie l'élément ajouré, au cours de laquelle on dispose les éléments d'outillage entre la première et la deuxième semelle, et la matière destinée à former au moins en partie l'élément ajouré entre les éléments d'outillage, de sorte à obtenir un outillage fermé dans lequel la matière destinée à former au moins en partie l'élément ajouré est emprisonnée entre les éléments d'outillage et forme une résistance pour les empêcher de se rapprocher les uns des autres,
b. Une étape de compression au cours de laquelle on applique une force contre les barreaux périphériques en direction des noyaux, de sorte à permettre le rapprochement des éléments d'outillage et ainsi la compaction de la matière destinée à former au moins en partie l'élément ajouré,
c. Une étape de consolidation pendant laquelle, la matière destinée à former au moins en partie l'élément ajouré durcit, et
d. Une étape de démoulage de l'élément ajouré ainsi formé.

Ainsi, lors de l'étape de compression, les éléments d'outillage glissent entre la première et la deuxième semelle et se rapprochent les uns des autres afin de permettre la compaction de la matière destinée à former au moins en partie l'élément ajouré.

Comme indiqué précédemment, par « matière destinée à former au moins en partie l'élément ajouré » on entend soit le matériau composite constitutif de l'élément ajouré, soit une partie du matériau composite constitutif de l'élément ajouré, tel qu'un renfort fi breux.

Un tel procédé permet de fabriquer des éléments ajourés en matériau composite, tels que des grilles d'inverseur de poussée pour nacelle d'aéronef, présentant des géométries adaptées aux performances aérodynamiques de la nacelle, grâce à un procédé plus simple et moins couteux que les procédés de l'art antérieur.

Selon d'autres caractéristiques de l'invention, le procédé de l'invention comporte l'une ou plusieurs des caractéristiques optionnelles suivantes considérées seules ou selon toutes les combinaisons possibles.

Selon une caractéristique, la matière destinée à former au moins en partie l'élément ajouré est composée de fibres et de résine sous forme de matériau composite préimprégné.

Selon une autre caractéristique, la matière destinée à former au moins en partie l'élément ajouré est une structure fibreuse dépourvue de résine.

Selon cette caractéristique, lors de l'étape de compression, on introduit une résine sous forme liquide afin d'imprégner la structure fibreuse.

Selon une autre caractéristique, la matière destinée à former au moins en partie l'élément ajouré est composée de fibres et de résine sous forme de matériau composite préimprégné, et lors de l'étape de compression, on introduit de la résine supplémentaire sous forme liquide afin d'imprégner la matière destinée à former au moins en partie l'élément ajouré.

Selon une caractéristique, la résine de la matière destinée à former au moins en partie l'élément ajouré est au moins partiellement durcie.

Selon une caractéristique, les noyaux adjacents sont configurés pour être déplacés de sorte que l'espacement entre noyaux adjacents soit variable entre 100% et 300% de l'épaisseur finale de l'élément ajouré à obtenir.

Selon une caractéristique, l'étape de compression est réalisée mécaniquement par au moins un dispositif de déplacement tel qu'un vérin.

Selon une caractéristique, l'étape de compression est réalisée jusqu'à obtenir une compaction de la matière destinée à former au moins en partie l'élément ajouré entre 5 et 70%.

Selon une caractéristique, l'étape de compression est réalisée en appliquant une force simultanément sur l'ensemble des barreaux périphériques.

Selon une caractéristique, l'étape de compression est réalisée en appliquant une force alternativement sur chaque barreau périphérique.

Selon la caractéristique selon laquelle l'outillage comporte des éléments d'outillage supplémentaires destinés à être disposés entre les première et seconde semelles, entre au moins un noyau et un barreau périphérique, les éléments d'outillage supplémentaires étant configurés pour permettre le moulage d'éléments pleins tels que des brides, le procédé peut comporter une étape de compression supplémentaire au cours de laquelle on applique une force contre au moins un élément d'outillage supplémentaire, de sorte à permettre le déplacement de l'élément d'outillage supplémentaire et ainsi la compaction de la matière destinée à former au moins en partie l'élément ajouré.

Selon cette caractéristique, l'étape de compression supplémentaire est réalisée au cours de l'étape de compression.

En variante, l'étape de compression supplémentaire est réalisée séparément de l'étape de compression.

Selon une caractéristique, l'étape de compression supplémentaire est réalisée mécaniquement par au moins un dispositif de déplacement supplémentaire tel qu'un vérin supplémentaire, agissant sur au moins un élément d'outillage supplémentaire.

Selon la caractéristique selon laquelle l'outillage comporte en outre un dispositif de compaction comportant une barre longitudinale destinée à être disposée à l'aplomb du bloc et configurée pour entraîner le bloc en translation, l'étape de compression supplémentaire est réalisée mécaniquement par au moins un dispositif de déplacement supplémentaire tel qu'un vérin supplémentaire agissant sur le dispositif de compaction.

Selon la caractéristique selon laquelle l'outillage comporte en outre un dispositif de compaction comportant au moins une protubérance disposée sur une des première et seconde semelles, configurée pour coopérer avec une encoche disposée sur un élément d'outillage supplémentaire à l'interface avec la seconde semelle, de sorte à permettre de déplacer l'élément d'outillage supplémentaire pour compacter la matière destinée à former au moins en partie l'élément ajouré, l'étape de compression supplémentaire est réalisée lors de la fermeture de l'outillage.

Selon une caractéristique, le procédé comporte une étape d'apport de résine (total ou partiel) postérieur à l'étape de disposition de matière destinée à former au moins en partie l'élément ajouré, entre les éléments d'outillage. Dans une variante la résine est apportée avant l'étape de compression. Dans une autre variante, la résine est apportée après l'étape de compression. Dans une autre variante, la résine est apportée avant et après l'étape de compression.

Selon une caractéristique, le procédé comporte une étape de chauffage au cours de laquelle on chauffe l'outillage pour ramollir la matière destinée à former au moins en partie l'élément ajouré, préalablement à l'étape de compression.

### Brève description des dessins

[Fig. 1] La figure 1 est une vue schématique partielle en perspective d'un outillage selon l'invention.
[Fig. 2] La figure 2 est une vue schématique d'une première variante de l'outillage de la figure 1, représentée en coupe selon un plan parallèle à une semelle de l'outillage.
[Fig. 3] La figure 3 est une vue schématique d'une deuxième variante de l'outillage de la figure 1, représentée en coupe selon un plan parallèle à une semelle de l'outillage.
[Fig. 4] La figure 4 est une vue schématique de l'outillage de la figure 2, illustrant un procédé de fabrication d'éléments ajourés en matériau composite, selon l'invention.
[Fig. 5] La figure 5 est une autre vue schématique de l'outillage de la figure 2, illustrant un procédé de fabrication d'éléments ajourés en matériau composite, selon l'invention.
[Fig. 6] La figure 6 est une vue schématique d'une première variante des semelles de l'outillage de la figure 1, représentées en coupe selon un plan perpendiculaire à une semelle de l'outillage.
[Fig. 7] La figure 7 est une vue schématique d'une deuxième variante des semelles de l'outillage de la figure 1, représentées en coupe selon un plan perpendiculaire à une semelle de l'outillage.
[Fig. 8] La figure 8 est une vue schématique partielle en perspective de l'outillage de la figure 2, comprenant des éléments d'outillage supplémentaires.
[Fig. 9] La figure 9 est une vue schématique partielle en perspective d'une première variante de l'outillage de la figure 8.
[Fig. 10] La figure 10 est une vue schématique partielle en perspective d'une deuxième variante de l'outillage de la figure 8.
[Fig. 11] La figure 11 est une vue schématique en perspective illustrant une première variante de noyaux d'outillage selon l'invention.
[Fig. 12] La figure 12 est une vue schématique en perspective illustrant une deuxième variante de noyaux d'outillage selon l'invention.
[Fig. 13] La figure 13 est une vue schématique partielle en perspective de l'outillage de la figure 1, comprenant des moyens de guidage des éléments d'outillage.
[Fig. 14] La figure 14 est une vue schématique en perspective illustrant une grille d'inverseur de poussée pour nacelle d'aéronef obtenu grâce au procédé selon l'invention.

### Description des modes de réalisation

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins afin de faciliter la description.

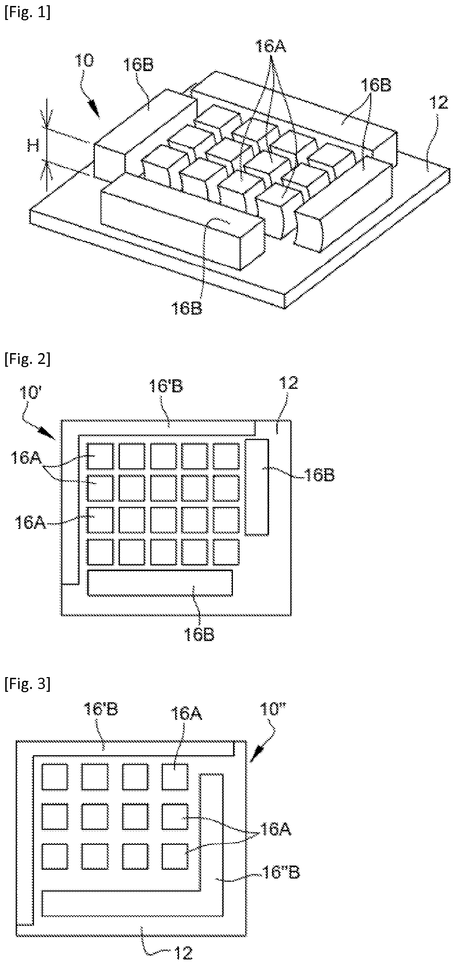

La figure 1 représente un outillage 10 selon l'invention, comportant une première semelle 12 sur laquelle sont disposés des éléments d'outillage 16A, 16B. L'outillage 10 comporte en outre une seconde semelle 14 (non représentée sur la figure 1), destinée à être disposée au-dessus des éléments d'outillage 16A, 16B.

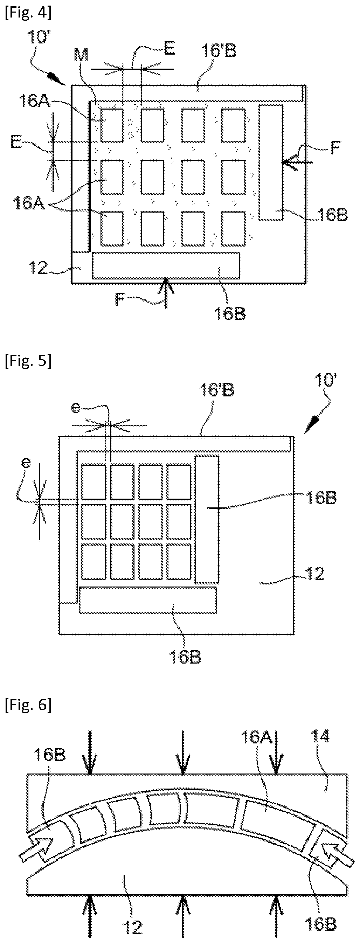

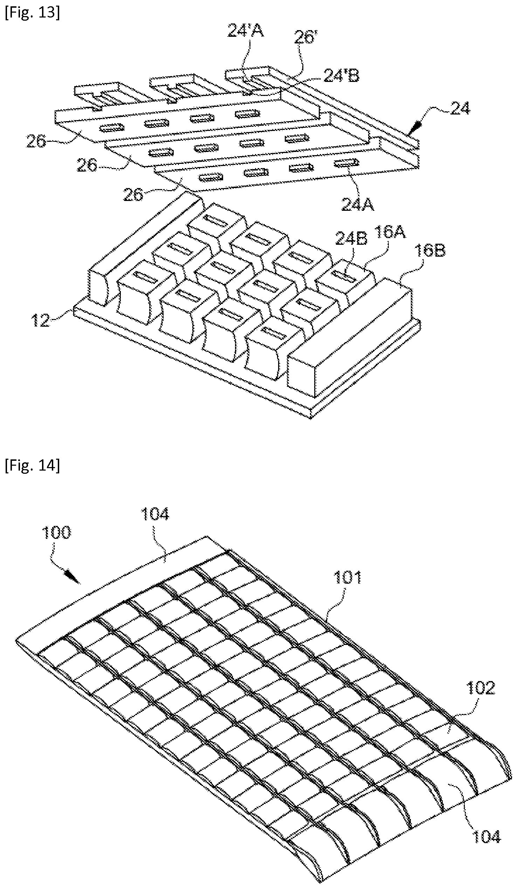

L'outillage 10 forme un moule permettant de fabriquer des éléments ajourés tels que des grilles 100 (figure 14) d'inverseur de poussée pour nacelle d'aéronef, selon le procédé décrit par la suite au regard des figures 4 et 5, et 8 à 10.

Dans l'exemple de la figure 1, Les éléments d'outillage 16A, 16B comprennent douze noyaux 16A disposés en quatre colonnes de trois noyaux alignés sur une même ligne, et quatre barreaux périphériques 16B qui entourent les noyaux 16A, les barreaux périphériques étant parallèles deux à deux. Les noyaux 16A sont mobiles en translation le long de la première semelle 12 et le long de la seconde semelle 14 (non représentée). En outre, les barreaux périphériques 16B sont mobiles en translation le long de la première semelle 12 et le long de la seconde semelle 14 (non représentée).

Ainsi, les première et seconde semelles comportent des surfaces, respectivement supérieure et inférieure, de glissement des éléments d'outillage 16A, 16B.

En variante, l'outillage peut comporter un nombre différent de colonne de noyaux et de nombre de noyaux par colonne. Par exemple, l'outillage peut comporter six colonnes de douze noyaux chacune. Dans un autre exemple, l'outillage peut comporter des nombres de noyaux différents d'une colonne à l'autre. Par exemple, l'outillage peur comporter une rangée de sept noyaux et une autre rangée de dix noyaux.

Les noyaux sont rigides et configurés pour être extractibles pour permettre le démoulage de l'élément ajouré à fabriquer.

Dans une variante non représentée, chaque noyau est constitué de plusieurs morceaux imbriqués entre eux, de sorte à permettre la fabrication d'éléments ajourés dont les ajourages sont de forme complexe tout en permettant à l'élément ajouré d'être démoulé aisément.

En variante, la totalité ou une partie des noyaux est fusible pour être éliminés par fusion, comme il sera décrit par la suite. A cet effet, ils peuvent être réalisés en alliage métallique à bas point de fusion, c'est-à-dire supérieur à la température de consolidation de thermocompression des éléments ajourés à fabriquer. Dans une autre variante utilisée alternativement ou partiellement, la totalité ou une partie des noyaux est soluble. A cette effet ils sont réalisés en matière non soluble avec la matière des éléments ajourés à fabriquer mais solubles par un solvant compatible avec le matériau des éléments ajourés à fabriquer une fois celui-ci suffisamment consolidé.

L'outillage 10 est représenté disposé horizontalement dans toutes les figures de la présente demande de brevet. En variante, il pourrait être disposé selon une autre orientation, par exemple verticalement afin de permettre d'utiliser les cinématiques de moyen pour réaliser les étapes de compaction décrites par la suite.

Les éléments d'outillage 16A, 16B présentent des hauteurs H supérieures ou égales à la hauteur souhaitée de l'élément ajouré à fabriquer. Ces hauteurs H correspondant à l'espace entre les première et seconde semelles entre lesquelles les éléments d'outillage 16A et 16B se déplacent. Pour une grille d'inverseur cette hauteur H est généralement comprise entre 30 et 60 mm (et éventuellement jusque 80 mm avec des surlongueurs à éliminer ensuite), préférentiellement entre 35 et 50 mm. La hauteur H est généralement unique pour un même outillage, mais il est possible d'avoir différentes hauteur H pour différents éléments d'outillage 16A 16B (c'est notamment une facilité lorsqu'on utilise des systèmes additionnels tels qu'en figure 13). Les dimensions horizontales des noyaux 16A sont généralement variables, de sorte que les dimensions des noyaux 16A correspondent aux dimensions des alvéoles 102 (figure 14) des éléments ajourés à obtenir.

La figure 2 illustre une première variante de réalisation de l'outillage selon l'invention.

A la différence de l'outillage 10 de la figure 1, les éléments d'outillage comportent des noyaux 16A, deux barreaux périphériques adjacents reliés entre eux pour former un premier barreau d'angle 16'B en forme de L et deux autre barreaux périphériques 16B. Le premier barreau d'angle 16'B est fixé sur la première semelle 12, tandis que les deux autres barreaux périphériques 16B sont configurés pour être mobiles en translation le long de la première semelle 12 et le long de la seconde semelle 14 (non représentée).

Le premier barreau d'angle 16'B est venu de matière avec la première semelle 12.

En variante, le barreau d'angle 16'B est un élément distinct de la première semelle 12 et est solidarisé avec la première semelle 12.

La figure 3 illustre une deuxième variante de réalisation de l'outillage selon l'invention

A la différence de l'outillage 10 de la figure 1, les éléments d'outillage comportent des noyaux 16A, deux barreaux périphériques adjacents reliés entre eux pour former un premier barreau d'angle 16'B en forme de L, et deux autres barreaux périphériques reliés entre eux pour former un deuxième barreau d'angle 16"B en forme de L. Le premier barreau d'angle 16'B est fixé sur la première semelle 12, tandis que le deuxième barreau d'angle 16"B est configuré pour être mobile en translation le long de la première semelle 12 et le long de la seconde semelle 14 (non représentée).

De la même manière qu'au regard de la figure 2, le premier barreau d'angle 16'B est venu de matière avec la première semelle 12.

En variante, le premier barreau d'angle 16'B est un élément distinct de la première semelle 12 et est solidarisé avec la première semelle 12.

Les figures 4 et 5 illustrent un procédé de fabrication d'un élément ajouré sous forme de grille 100 (figure 14) d'inverseur de poussée pour nacelle d'aéronef, en matériau composite, grâce à l'outillage 10' de la figure 2. La grille 100 comporte des profils 101 longitudinaux et transversaux délimitant des alvéoles 102 de passage d'air, comme il sera vu au regard de la figure 14.

Le procédé comporte, dans cet exemple de réalisation, une étape de disposition des éléments d'outillage 16A, 16B, 16'B et d'un matériau M composite préimprégné, sur la première semelle 12, le matériau M composite préimprégné étant disposé entre les éléments d'outillage 16A, 16B, 16'B, sur la première semelle 12. Le matériau M composite préimprégné contribuant à créer une distance entre deux éléments d'outillage adjacents sur la première semelle 12. Il forme une résistance entre les éléments d'outillage, pour les empêcher de se rapprocher les uns des autres. Le matériau M composite préimprégné est destiné à former les profils 101 longitudinaux et transversaux de l'élément ajouré à obtenir, tandis que les noyaux 16A sont destinés à délimiter des évidements afin de former les alvéoles 102 de passage d'air (figure 14).

Le matériau M composite préimprégné comprend par exemple une résine thermodur ou thermoplastique et des fibres.

La résine du matériau M composite préimprégné peut être crue ou partiellement réticulée ou totalement réticulée.

Lors de cette étape de disposition des éléments d'outillage, les barreaux périphériques peuvent être disposé avant ou après les noyaux. En outre, le matériau composite préimprégné est avantageusement ajouté au fur et à mesure de la disposition des éléments d'outillage, de sorte à permettre de contrôler l'espacement entre les éléments d'outillage, et à assurer la disposition des fibres le long des différentes surfaces de l'élément ajouré à obtenir.

Le matériau M composite préimprégné comporte avantageusement des fibres continues et/ou des fibres discontinues, telles que des fibres de carbone, de verre, d'aramide, de nylon ou encore de polyester.

A titre d'exemple, l'espacement E initial entre les éléments d'outillage 16A, 16B, 16'B est compris entre 1 mm et 8 mm, correspondant à 105% à 300 % de l'épaisseur finale de la grille 100 (figure 14) à obtenir. Cet espacement E initial est variable au sein de l'outillage.

Ensuite, la deuxième semelle 14 (non représentée) est disposée sur les éléments d'outillage 16A, 16B, 16'B pour fermer l'outillage. Des dispositifs externes ou intégrés aux semelles permettent de maîtriser la distance entre les deux semelles afin de limiter les jeux entre les deux semelles, c'est-à-dire de guider les éléments d'outillage 16A, 16B, 16'B et de limiter leurs déplacements dans une direction transversale aux première 12 et seconde 14 semelles (on fera en sorte d'obtenir un jeu entre semelles et noyaux compris entre quelques centièmes de millimètres et quelques dixièmes de millimètres).

Une étape de chauffage optionnelle peut être réalisée, par exemple afin de ramollir la résine du matériau M composites préimprégné.

Enfin, lors d'une étape de compression, on applique une force F contre chaque barreau périphérique 16B, en direction des noyaux 16A, perpendiculairement aux interfaces entre les noyaux 16A et les barreaux périphériques 16B, afin de rapprocher les éléments d'outillage 16A, 16B, 16'B, comme représenté à la figure 5. Cette étape permet de comprimer le matériau M composite préimprégné.

La force F est appliquée grâce à l'action d'un dispositif de déplacement permettant d'exercer une force sur l'élément d'outillage, afin d'obtenir le déplacement dudit élément d'outillage, tel que par exemple un vérin (non représenté). Ainsi, autant de dispositif de déplacement que de barreau mobile est nécessaire.

A titre d'exemple, l'espacement « e » final entre les éléments d'outillage est de l'ordre 0,05 mm à 7 mm. Cet espacement « e » final crée les épaisseurs des parois de l'élément ajouré à mouler.

La consolidation ou durcissement de la pièce est alors obtenue par maintien en température puis refroidissement selon les valeurs et durées adaptées à la résine utilisée. On obtient alors une grille 100 (figure 14) d'inverseur de poussée pour nacelle, par démoulage du matériau composite consolidé et extraction des éléments d'outillage. Des opérations de parachèvement, et d'usinage peuvent aussi être réalisées.

Ce procédé est un procédé de moulage par compression dans un outillage selon l'invention.

Lors de l'étape de compression, les noyaux 16A et les barreaux périphériques 16B glissent entre la première 12 et le seconde 14 semelle (non représentée) et se rapprochent les uns des autres.

Dans le cas où les noyaux sont réalisés en alliage métalliques à bas point de fusion, une étape de chauffage à une température supérieure à la température de fusion de l'alliage est réalisée après consolidation de la résine.

Dans un mode de réalisation, l'étape de chauffage est réalisée après le refroidissement.

Dans des modes de réalisation non illustrés, le procédé de fabrication d'un élément ajouré tel que la grille 100 (figure 14) est réalisé grâce aux outillages des figures 1 ou 3.

Le procédé utilisant l'outillage de la figure 1 nécessite l'utilisation de quatre vérins agissant sur chacun des quatre barreaux périphériques 16B.

Le procédé utilisant l'outillage de la figure 3 nécessite en revanche l'utilisation d'un seul vérin agissant sur le second barreau d'angle 16"B.

La figure 6 est une section transverse de l'outillage. Elle illustre une première variante de réalisation des semelles de l'outillage selon l'invention. Dans cette variante, les première 12 et seconde 14 semelles sont courbes au niveau de leur interface avec les éléments d'outillage 16A, 16B. De cette façon, les éléments ajourés fabriqués par un tel outillage auront une forme courbée, nommée également circonférentielle.

Les première 12 et seconde 14 semelles sont complémentaires entre elles et avec les éléments d'outillage 16A, 16B, 16'B 16"B, de sorte à permettre de refermer le moule.

En outre, les surfaces des noyaux 16A à l'interface avec les première 12 et seconde 14 semelles, sont également courbées pour épouser la forme des semelles.

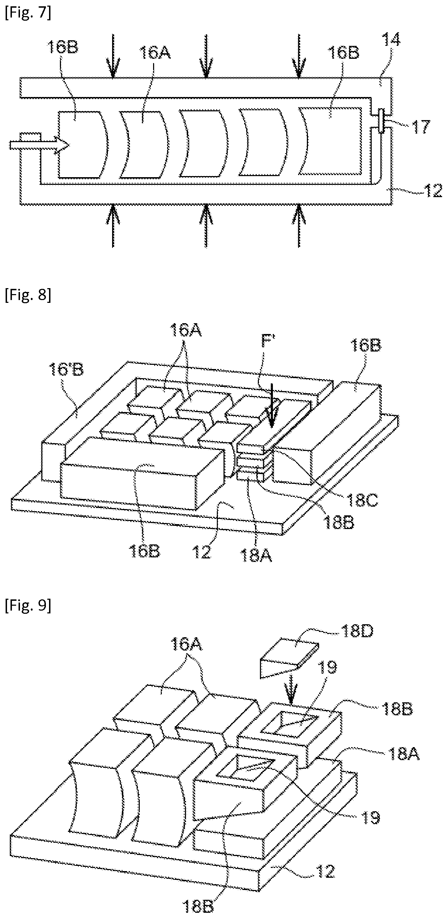

La figure 7 illustre une deuxième variante de réalisation des semelles de l'outillage selon l'invention, dans laquelle la première semelle 12 présente la forme d'un bac en U, dans lequel sont disposés les éléments d'outillage 16A, 16B, 16'B, et la seconde semelle 14 présente la forme d'un bac en U avec un côté ouvert. Ainsi, les branches des première 12 et seconde 14 semelles, disposées en regard l'une de l'autre, sont destinées à être attachées par des moyens d'attache 17 afin de fermer le moule.

Selon cette variante, le barreau périphérique disposé au contact des branches des première 12 et seconde 14 semelles attachées, est fixe.

La figure 8 illustre l'outillage de la figure 2, comportant en outre des éléments d'outillage supplémentaires 18.

Les éléments d'outillage supplémentaires 18A, 18B sont configurés pour permettre le moulage d'éléments pleins tels que des brides 104 de raccordement de la grille 100 (figure 14) à une structure fixe ou un capotage aérodynamique externe de la nacelle. A cet effet, les éléments d'outillage supplémentaires comprennent un bloc inférieur 18A, un bloc supérieur 18B, empilés verticalement, entre lesquels un matériau M composite préimprégné est destiné à être disposé. Le bloc inférieur 18A est disposé sur la première semelle 12. Le bloc supérieur 18B est configuré pour être mobile en translation perpendiculairement à la première semelle 12.

L'outillage comporte en outre une barre longitudinale 18C, disposé entre le bloc supérieur 18B et la seconde semelle 14 (non représentée). La barre longitudinale 18C est un dispositif de compaction configuré pour entraîner le bloc supérieur 18B en translation en direction du bloc inférieur 18A, sous l'action d'un vérin supplémentaire (non représenté).

Les éléments d'outillage supplémentaires 18A, 18B et la barre longitudinale 18C de l'outillage de la figure 8 sont disposés entre une rangée (colonne ou ligne) de noyaux 16A et un barreau périphérique 16B.

Le procédé de fabrication d'une grille 100 (figure 14) comprenant des brides 104 (figure 14) de raccordement à une structure fixe ou un capotage aérodynamique externe d'une nacelle grâce à un tel outillage, est similaire au procédé décrit au regard des figures 4 et 5 à la différence qu'une étape de compression supplémentaire est réalisée, de préférence simultanément à l'étape de compression, au cours de laquelle on applique une force F' contre la barre longitudinale 18C, en direction des blocs 18A, 18B, perpendiculairement à l'interface entre la barre longitudinale 18C et le bloc supérieur 18B, afin de rapprocher les blocs et ainsi comprimer le matériau M composite préimprégné disposé entre les blocs.

La figure 9 illustre une première variante de réalisation de l'outillage de la figure 8.

A la différence de l'outillage de la figure 8, les éléments d'outillage supplémentaires comprennent deux blocs supérieurs 18B disposés sur un bloc inférieur 18A, de sorte que le matériau composite préimprégné soit disposé entre chaque bloc afin de former un élément plein présentant une forme de T inversée.

Une autre différence est que l'outillage ne comporte pas de barre longitudinale 18C, mais une pluralité de protubérances 18D disposées sur la seconde semelle 14 (non représentée) et configurées pour coopérer avec des encoches 19 disposées sur la face supérieure de chaque bloc supérieur 18B.

Les protubérances 18D et les encoches 19 forment un dispositif de compaction configuré pour entraîner les blocs supérieurs 18B en translation en direction du bloc inférieur 18A. Selon cette variante, l'étape de compression supplémentaire ne nécessite pas de vérin supplémentaire.

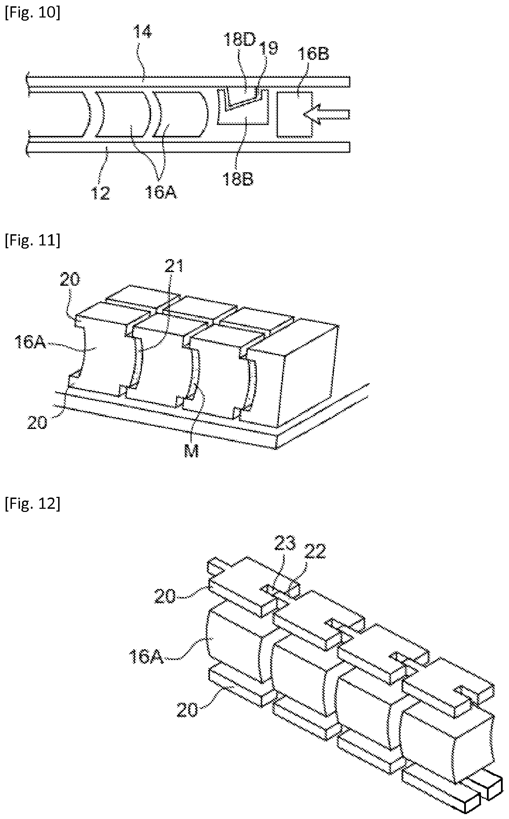

La figure 10 illustre une deuxième variante de réalisation de l'outillage de la figure 8.

A la différence de l'outillage de la figure 8, les éléments d'outillage supplémentaires comprennent au moins un bloc supérieur 18B destiné à être disposé sur une couche de matériau composite préimprégné lors de l'utilisation de l'outillage. De la même manière qu'au regard de la figure 9, le bloc supérieur 18B comporte une encoche 19 destinée à coopérer avec une protubérance 18D disposée sur la semelle supérieure 14. La protubérance 18D et l'encoche 19 forment un dispositif de compaction permettant de déplacer le bloc supérieur 18B afin de comprimer le matériau composite préimprégné. Selon cette variante, l'étape de compression supplémentaire ne nécessite pas de vérin supplémentaire.

La figure 11 illustre une première variante de noyaux d'outillage selon l'invention.

Selon cette première variante, les noyaux 16A comportent des excroissances 20 inférieures et supérieures, chaque excroissance 20 présentant une forme de plaque dont les dimensions horizontales sont sensiblement égales aux dimensions horizontales des noyaux, chaque plaque étant décalée par rapport au noyau dans une même direction horizontale, de sorte que le noyau présente un profil en C. Ces excroissances 20 sont au contact des première 12 et seconde 14 semelles (non représentées). Ainsi, deux noyaux adjacents présentent des profils en C complémentaires et peuvent être emboîtés, ce qui permet de créer une chambre de compression 21 pour le matériau M composite préimprégné installée entre les noyaux. En outre, le rapprochement des noyaux 16A est limité par la longueur des excroissances associée à la longueur d'un lamage, tout en laissant un espace minimal entre les noyaux 16A, formant la chambre de compression 21 pour le matériau M composite préimprégné.

Le lamage a une longueur au moins supérieure à la compaction de matière à effectuer. Par exemple si l'épaisseur des profils 101 longitudinaux et transversaux de l'élément ajouré 100 à obtenir est de 3 mm, et qu'il est nécessaire de compacter de 300% la matière pour former l'élément à ajourer 100, lors de l'installation de l'outillage la matière occupe 9 mm d'épaisseur entre deux éléments adjacents d'outillage. Le lamage devrait typiquement être d'au moins 10 mm pour que les outillages s'emboîtent lors de l'installation.

Dans une variante non représentée, les excroissances 20 de noyaux 16A adjacents présentent des formes complémentaires en C, permettant leur emboîtement selon deux directions, lors du rapprochement des noyaux 16A.

Les excroissances 20 sont des moyens pour délimiter un espace minimal entre les noyaux.

Les excroissances 20 sont venues de matière avec les noyaux 16A.

En variante, les excroissances 20 sont des éléments distincts des noyaux 16A.

Dans une variante non représentée, les noyaux comportent une excroissance inférieure ou une excroissance supérieure. Le noyau présente alors une forme dite en L.

La figure 12 illustre une deuxième variante de noyaux d'outillage selon l'invention.

Selon cette deuxième variante, les noyaux 16A comportent une excroissance inférieure décalée par rapport au noyau dans une première direction horizontale, et une excroissance supérieure décalée par rapport au noyau dans une deuxième direction horizontale opposée à la première direction horizontale. Le noyau présente alors un profil en Z. Dans l'exemple de la figure 12, les excroissances sont organisées dans les direction longitudinale et transversales. Lors de l'emboitement des noyaux entre eux, ils conservent la latitude de bouger dans une direction verticale selon le sens prédéfini par le sens de l'excroissance.

Les excroissances 20 peuvent comporter des pattes d'indexation 22 longitudinales, comme représentée sur la figure 12. Ces pattes d'indexation 22 sont associées à des cavités 23 complémentaires dans les noyaux adjacents, permettant lors du rapprochement des noyaux 16A leur emboîtement entre eux assurant un meilleur guidage.

Dans des variantes non représentées, les pattes d'indexation 22 de noyaux 16A adjacents présentent des formes complémentaires en C, en V ou en demi-lune.

En outre, dans d'autres variantes, des pattes d'indexation peuvent être disposées au dessus ou au dessous des excroissances 20.

Dans des variantes non représentées des pattes d'indexations sont prévues sur deux côtés des excroissances 20 associées à des cavités dans les noyaux adjacents, permettant l'emboitement des noyaux adjacents dans deux directions horizontales. Ceci permet d'améliorer le guidage en position relatif de deux noyaux selon deux directions, lors du rapprochement des noyaux 16A et donc d'améliorer la position relative de deux alvéoles dans la grille moulée.

Les pattes d'indexation 22 sont des éléments distincts des noyaux 16A.

En variante, les pattes d'indexation 22 sont venues de matière avec les noyaux 16A.

Dans des variantes non représentées, les formes complémentaires sur les excroissances 20 peuvent comporter des gorges pour installer des joints souples pour améliorer l'étanchéité au dessus et/ou au dessus des noyaux.

Dans d'autres variantes non représentées les formes complémentaires sur les excroissances 20 peuvent comporter des protubérances périphériques destinées à appuyer les unes contre les autres à s'écrouir au contact du noyau adjacent et ainsi permettre une étanchéité verticale des zones de moulage inter noyaux.

La figure 13 représente l'outillage de la figure 1, comprenant en outre des moyens de guidage 24 des éléments d'outillage 16.

Les moyens de guidage 24 sont configurés pour guider les éléments d'outillage 16 dans leur déplacement de sorte qu'ils aient un meilleur positionnement relatif.

Les moyens de guidage 24 comportent des nervures 24A coopérant avec des rainures 24B.

Plus particulièrement, dans une première solution, les moyens de guidage comportent des traverses 26, chaque traverse 26 étant disposée au contact d'une rangée de noyaux 16A, entre les noyaux 16A et la seconde semelle 14 (non représentée). Chaque traverse 26 comporte des nervures 24A coopérant avec des rainures 24B longitudinales disposées sur les noyaux à l'interface entre les noyaux 16A et les traverses 26. Ainsi, ces nervures 24A et rainures 24B permettent de guider le déplacement des noyaux 16A dans une première direction.

Dans une seconde solution, les moyens de guidage comportent en outre des traverses supplémentaires 26' s'étendant entre les traverses 26 et la seconde semelle 14 (non représentée) et s'étendant perpendiculairement aux traverses 26. Chaque traverse supplémentaire 26' comporte une nervure supplémentaire 24'A coopérant avec des rainures supplémentaires 24'B disposées sur les traverses 26, à l'opposé des nervures 24A. Ainsi, ces nervures supplémentaires 24'A et rainures supplémentaires 24'B permettent de guider le déplacement des noyaux 16A dans une deuxième direction.

Dans d'autres solutions non représentées, les moyens de guidages additionnels sont répétés au dessus et au dessous des noyaux, c'est-à-dire en intercalaires entre les première semelle et noyau d'une part et noyau et seconde semelle d'autre part.

Dans les figures illustratives, il est présenté des rangées d'alvéoles organisées selon deux directions perpendiculaires d'un quadrilatère. L'outillage selon l'invention convient également si les profils d'alvéoles ne sont pas tous perpendiculaires entre eux. Par exemple on peut envisager des profils longitudinaux parallèles et des profils transversaux disposées en biais, selon des direction en biais similaires ou non entre deux rangées.

La figure 14 illustre une grille 100 d'inverseur de poussée pour nacelle d'aéronef obtenu grâce au procédé selon l'invention.

La grille 100 comporte des alvéoles 102 de passage d'air, délimitées par des profils 101 longitudinaux et transversaux, et des brides 104 de raccordement de la grille 100 à une structure fixe ou un capotage aérodynamique externe de la nacelle (non représenté).

## Revendications

1. Outillage pour la fabrication d'un élément ajouré en matériau composite, tel qu'une grille de déviation d'air ou une grille (100) d'inverseur de poussée pour nacelle d'aéronef, l'outillage comportant :
- une première (12) et une seconde (14) semelle, chaque semelle étant configurée pour être disposée de part et d'autre de l'élément ajouré à fabriquer,
- des éléments d'outillage (16A, 16B, 16'B, 16"B) disposés entre les première et seconde semelles, les éléments d'outillage comprenant :
∘ Au moins un noyau (16A) configuré pour délimiter une alvéole (102) de l'élément ajouré à fabriquer, l'au moins un noyau étant mobile en translation le long des première et seconde semelles,
∘ Des barreaux périphériques (16B, 16'B, 16"B) disposés en périphérie des noyaux et configurés pour délimiter l'élément ajouré à fabriquer, au moins un barreau périphérique étant mobile en translation le long des première et seconde semelles.

2. Outillage selon la revendication précédente, dans lequel les première et seconde semelles sont courbes avec un secteur angulaire de l'ordre de 30 à 60°.

3. Outillage selon l'une quelconque des revendications précédentes, dans lequel chaque barreau périphérique (16'B) est mobile en translation le long des première et seconde semelles.

4. Outillage selon l'une quelconque des revendications précédentes, comportant au moins deux barreaux périphériques adjacents reliés entre eux pour former un barreau d'angle (16'B) en forme de L.

5. Outillage selon la revendication précédente, dans lequel le barreau d'angle est non mobile en translation le long des première et seconde semelles.

6. Outillage selon la revendication 4, dans lequel le barreau d'angle est mobile en translation le long des première et seconde semelles.

7. Outillage selon l'une quelconque des revendications précédentes, comportant des dispositifs de déplacement tels que des vérins, configurés pour appliquer une force contre chaque barreau périphérique (16B, 16"B) mobile en translation.

8. Outillage selon l'une quelconque des revendications précédentes, comportant des éléments d'outillage supplémentaires (18A, 18B) destinés à être disposés entre les première et seconde semelles, entre au moins un noyau et un barreau périphérique, les éléments d'outillage supplémentaires étant configurés pour permettre le moulage d'éléments pleins tels que des brides (104).

9. Outillage selon la revendication précédente, dans lequel les éléments d'outillage supplémentaires comportent au moins un bloc (18B) mobile en translation perpendiculairement aux première et seconde semelles et configuré pour délimiter un élément plein tel qu'une bride (104).

10. Outillage selon la revendication précédente, comportant un dispositif de compaction (18C) configuré pour assurer la translation du bloc (18B), afin de permettre la compaction de matière disposée dans l'outillage pour former au moins en partie l'élément plein.

11. Outillage selon l'une quelconque des revendications précédentes, comportant des moyens (20, 22) pour délimiter un espace minimal entre les noyaux.

12. Outillage selon l'une quelconque des revendications précédentes, comportant des moyens de guidage (24) configurés pour guider les éléments d'outillage dans leur déplacement.

13. Procédé de fabrication d'éléments ajourés en matériau composite, tels que des grilles (100) d'inverseur de poussée pour nacelle d'aéronef, par moulage par compression dans un outillage selon l'une quelconque des revendications précédentes, comprenant les étapes suivantes :
a- Une étape de disposition des éléments d'outillages (16A, 16B, 16'B, 16"B) et de matière (M) destinée à former au moins en partie l'élément ajouré, au cours de laquelle on dispose les éléments d'outillage entre la première (12) et la deuxième (14) semelle, et la matière destinée à former au moins en partie l'élément ajouré entre les éléments d'outillage, de sorte à obtenir un outillage fermé dans lequel la matière destinée à former au moins en partie l'élément ajouré est emprisonnée entre les éléments d'outillage et forme une résistance pour les empêcher de se rapprocher les uns des autres ;
b- Une étape de compression au cours de laquelle on applique une force (F) contre les barreaux périphériques en direction des noyaux, de sorte à permettre le rapprochement des éléments d'outillage et ainsi la compaction de la matière destinée à former au moins en partie l'élément ajouré ;
c- Une étape de consolidation pendant laquelle la matière destinée à former au moins en partie l'élément ajouré durcit ; et
d- Une étape de démoulage de l'élément ajouré ainsi formé.

14. Procédé selon la revendication précédente, dans lequel les noyaux adjacents sont configurés pour être déplacés de sorte que l'espacement entre noyaux adjacents soit variable entre 100% et 300% de l'épaisseur finale de l'élément ajouré à obtenir.

## Patentansprüche

1. Werkzeug zum Herstellen eines perforierten Elements aus Verbundwerkstoff, beispielsweise eines Luftablenkgitters oder eines Schubumkehrgitters (100) für eine Flugzeuggondel, wobei das Werkzeug Folgendes aufweist:
- eine erste (12) und eine zweite (14) Sohlenplatte, wobei jede Sohlenplatte so konfiguriert ist, dass sie auf beiden Seiten des herzustellenden perforierten Elements angeordnet werden kann,
- Werkzeugelemente (16A, 16B, 16'B, 16"B), die zwischen der ersten und der zweiten Sohlenplatte angeordnet sind, wobei die Werkzeugelemente Folgendes umfassen:
∘ mindestens einen Kern (16A), der so konfiguriert ist, dass er eine Zelle (102) des herzustellenden perforierten Elements begrenzt, wobei der mindestens eine Kern entlang der Länge der ersten und der zweiten Sohlenplatte verschiebbar ist,
∘ periphere Stangen (16B, 16'B, 16"B), die am Umfang der Kerne angeordnet und so konfiguriert sind, dass sie das herzustellende perforierte Element begrenzen, wobei mindestens eine periphere Stange entlang der Länge der ersten und der zweiten Sohlenplatte verschiebbar ist.

2. Werkzeug nach dem vorhergehenden Anspruch, wobei die erste und die zweite Sohlenplatte mit einem Winkelsektor in der Größenordnung von 30 bis 60° gekrümmt sind.

3. Werkzeug nach einem der vorhergehenden Ansprüche, wobei jede periphere Stange (16'B) entlang der Länge der ersten und der zweiten Sohlenplatte verschiebbar ist.

4. Werkzeug nach einem der vorhergehenden Ansprüche, das mindestens zwei benachbarte periphere Stangen umfasst, die miteinander verbunden sind, um eine L-förmige Winkelstange (16'B) zu bilden.

5. Werkzeug nach dem vorhergehenden Anspruch, wobei die Winkelstange nicht entlang der Länge der ersten und der zweiten Sohlenplatte verschiebbar ist.

6. Werkzeug nach Anspruch 4, wobei die Winkelstange entlang der Länge der ersten und der zweiten Sohlenplatte verschiebbar ist.

7. Werkzeug nach einem der vorhergehenden Ansprüche, das Verschiebevorrichtungen wie etwa Heber aufweist, die so konfiguriert sind, dass sie eine Kraft auf jede verschiebbare periphere Stange (16B, 16"B) ausübt.

8. Werkzeug nach einem der vorhergehenden Ansprüche, das zusätzliche Werkzeugelemente (18A, 18B) aufweist, die dazu bestimmt sind, zwischen der ersten und der zweiten Sohlenplatte, zwischen mindestens einem Kern und einer peripheren Stange angeordnet zu sein, wobei die zusätzlichen Werkzeugelemente so konfiguriert sind, dass sie das Formen fester Elemente wie Flansche (104) ermöglichen.

9. Werkzeug nach dem vorhergehenden Anspruch, wobei die zusätzlichen Werkzeugelemente mindestens einen Block (18B) aufweisen, der senkrecht zur ersten und zur zweiten Sohlenplatte verschiebbar und so konfiguriert ist, dass er ein festes Element wie einen Flansch (104) begrenzt.

10. Werkzeug nach dem vorhergehenden Anspruch, das eine Verdichtungsvorrichtung (18C) umfasst, die so konfiguriert ist, dass sie die Verschiebung des Blocks (18B) gewährleistet, um die Verdichtung des im Werkzeug angeordneten Materials zu ermöglichen, um mindestens teilweise das feste Element zu bilden.

11. Werkzeug nach einem der vorhergehenden Ansprüche, das Mittel (20, 22) zum Begrenzen eines Mindestraums zwischen den Kernen aufweist.

12. Werkzeug nach einem der vorhergehenden Ansprüche, das ein Führungsmittel (24) umfasst, das so konfiguriert ist, dass es die Werkzeugelemente bei ihrer Bewegung führt.

13. Verfahren zum Herstellen von perforierten Elementen aus Verbundwerkstoff, beispielsweise Schubumkehrgittern (100) für eine Flugzeuggondel, durch Formpressen in einem Werkzeug nach einem der vorhergehenden Ansprüche, die folgenden Schritte umfassend:
a. einen Schritt des Anordnens der Werkzeugelemente (16A, 16B, 16'B, 16"B) und des Materials (M), das dazu bestimmt ist, mindestens teilweise das perforierte Element zu bilden, bei dem die Werkzeugelemente zwischen der ersten (12) und der zweiten (14) Sohlenplatte angeordnet werden und das Material, das dazu bestimmt ist, mindestens teilweise das perforierte Element zu bilden, zwischen den Werkzeugelementen angeordnet wird, um ein geschlossenes Werkzeug zu erhalten, in dem das Material, das dazu bestimmt ist, mindestens teilweise das perforierte Element zu bilden, zwischen den Werkzeugelementen eingeschlossen ist und einen Widerstand bildet, der sie daran hindern soll, sich einander zu nähern;
b. einen Schritt des Verdichtens, bei dem eine Kraft (F) auf die peripheren Stangen in Richtung der Kerne ausgeübt wird, um die Annäherung der Werkzeugelemente und damit die Verdichtung des Materials zu ermöglichen, das dazu bestimmt ist, mindestens teilweise das perforierte Element zu bilden;
c. einen Schritt des Verfestigens, bei dem das Material dazu bestimmt ist, mindestens teilweise das aushärtende perforierte Element zu bilden; und
d. einen Schritt des Entformens des so gebildeten perforierten Elements.

14. Verfahren nach dem vorhergehenden Anspruch, wobei die benachbarten Kerne so konfiguriert sind, dass sie so bewegt werden können, dass der Abstand zwischen benachbarten Kernen zwischen 100 % und 300 % der endgültigen Dicke des zu erhaltenden perforierten Elements variabel ist.

## Claims

1. A tooling for the manufacture of an apertured element made of a composite material, such as an air cascade vane or a thrust reverser cascade (100) for an aircraft nacelle, the tooling including:
- first (12) and second (14) sole plates, each sole plate being configured to be placed on either side of the apertured element to be manufactured,
- tooling elements (16A, 16B, 16'B, 16"B) placed between the first and second sole plates, the tooling elements comprising:
∘ at least one core (16A) configured to delimit a cell (102) of the apertured element to be manufactured, the at least one core being movable in translation along the first and second sole plates,
∘ peripheral bars (16B, 16'B, 16"B) placed on the periphery of the cores and configured to delimit the apertured element to be manufactured, at least one peripheral bar being movable in translation along the first and second sole plates.

2. The tooling according to the preceding claim, wherein the first and second sole plates are curved with an angular sector in the range of 30 to 60°.

3. The tooling according to any one of the preceding claims, wherein each peripheral bar (16'B) is movable in translation along the first and second sole plates.

4. The tooling according to any one of the preceding claims, including at least two adjacent peripheral bars connected together so as to form a L-shaped angle bar (16'B).

5. The tooling according to the preceding claim, wherein the angle bar is not movable in translation along the first and second sole plates.

6. The tooling according to claim 4, wherein the angle bar is movable in translation along the first and second sole plates.

7. The tooling according to any one of the preceding claims, including displacing devices such as cylinders, configured to apply a force against each peripheral bar (16B, 16"B) movable in translation.

8. The tooling according to any one of the preceding claims, including additional tooling elements (18A, 18B) intended to be placed between the first and second sole plates, between at least one core and one peripheral bar, the additional tooling elements being configured to enable molding of solid elements such as flanges (104).

9. The tooling according to the preceding claim, wherein the additional tooling elements include at least one block (18B) movable in translation perpendicular to the first and second sole plates and configured to delimit a solid element such as a flange (104).

10. The tooling according to the preceding claim, including a compaction device (18C) configured to ensure the translation of the block (18B), in order to enable the compaction of the material placed in the tooling to form the solid element at least in part.

11. The tooling according to any one of the preceding claims, including means (20, 22) for delimiting a minimum space between the cores.

12. The tooling according to any one of the preceding claims, including guide means (24) configured to guide the tooling elements in their movement.

13. A method for manufacturing apertured elements made of a composite material, such as thrust reverser cascades (100) for an aircraft nacelle, by compression molding in a tooling according to any one of the preceding claims, comprising the following steps:
a- a step of disposing the tooling elements (16A, 16B, 16'B, 16"B) and a material (M) intended to form the apertured element at least in part, during which the tooling elements are placed between the first (12) and second (14) sole plates, and the material intended to form the apertured element at least in part between the tooling elements, so as to obtain a closed tooling in which the material intended to form the apertured element at least in part is trapped between the tooling elements and forms a resistance to prevent them from approaching each other;
b- a compression step during which a force (F) is applied against the peripheral bars in the direction of the cores, so as to allow approaching of the tooling elements to each other and thus the compaction of the material intended to form the apertured element at least in part;
c- a consolidation step during which the material intended to form the apertured element at least in part hardens; and
d- a step of demolding the apertured element thus formed.

14. The method according to the preceding claim, wherein the adjacent cores are configured to be displaced so that the spacing between adjacent cores is variable between 100% and 300% of the final thickness of the apertured element to be obtained.
